# EUROPÄISCHE PATENTSCHRIFT

(11) **EP 1 750 174 B1**
(45) Veröffentlichungstag und Bekanntmachung des Hinweises auf die Patenterteilung: **14.07.2010**
(21) Anmeldenummer: 06001785.2
(22) Anmeldetag: 28.01.2006
(51) Int. Cl.: G03C 11/24

(54) **Rückgewinnung von Wertstoffen aus Altfilmmaterial**
Process for the recovery of materials from waste photographic material
Procédé de récupération des matériaux de déchet photographique

(30) Priorität: 04.08.2005 DE 102005036619
(43) Veröffentlichungstag der Anmeldung: 07.02.2007
(73) Patentinhaber: Külps, Heinz-Jürgen, 55278 Dalheim (DE); Gellermann, Siegfried T., 55124 Mainz (DE)
(72) Erfinder: Külps, Heinz-Jürgen, 55278 Dalheim (DE); Gellermann, Siegfried T., 55124 Mainz (DE)

(56) Entgegenhaltungen:
- DE-C1- 3 440 894
- GB-A- 2 019 375
- US-A- 5 017 455

## Beschreibung

Die Aufgabe zur vorliegenden Erfindung betrifft ein Verfahren zur Rückgewinnung des Wertmetalles Silber aus fotografischem Filmmaterial, das nicht mehr genutzt wird. Die Gewinnung erfolgt in der Weise, dass das fotografische Trägermaterial, insbesondere das Polyethylenterephthalat (PET), in geeigneter Form wieder als Sekundärrohstoff eingesetzt werden kann. Die Wirtschaftlichkeit des hier beschriebenen neuen Verfahrens liegt darin, dass die Wertstoffe in einem Ein-Stufen-Verfahren getrennt werden. Dies geschieht mit Hilfe einer Reaktionslösung, die nur eine aktive Komponente enthält.

### Stand der Technik

Das maßgebliche Verfahren des 20. Jahrhunderts zur Herstellung eines Bildes ist die Fotografie auf der Basis der Herstellung eines Silberbildes durch Ablichtung eines Objektes auf einer lichtempfindlichen Filmschicht, die als optisch aktiven Bestandteil eine feine Verteilung von Silberbromid-Kristallen in einer präparierten Gelatine-Schicht enthält.

Die Herstellung eines Bildes auf der Basis der Silberfotografie erfolgt prinzipiell durch einen fotografischen Entwicklungsprozess, dem sich ein fotografischer Fixierprozess anschließt. Damit wird erreicht, dass man ein dauerhaftes fotografisches Bild erhält.

Bei der Herstellung eines dauerhaften Bildes auf Silberbasis wird das Metall nur zum Teil in das fotografische Bild eingebaut. Ein anderer Teil verbleibt in den wässrigen Bädern zur Herstellung des dauerhaften Bildes.

Das chemische Element Silber hat eine zentrale Funktion bei der Silberbild-Fotografie. Über die physikalisch-chemische Funktion hinaus hat das Edelmetall aber auch eine enorme wirtschaftliche Bedeutung.

Die Verwertung der gebrauchten Entwickler- und Fixierbäder, insbesondere zur Rückgewinnung des enthaltenen Wertstoffes Silber, geschieht auf vielfältige Art und Weise.

Das Kompendium von W. Baumann mit dem Titel "Fotochemikalien, Daten und Fakten zum Umweltschutz", 2. Auflage, Springer-Verlag, Berlin, Heidelberg, New York u. w., 1994, führt die gängigen Verfahren zur Verwertung von fotografischen Lösungen auf.

Der Patentserver des Deutschen Patent- und Markenamtes bietet unter der Internetadresse www.depatisnet.de Zugriff auf eine Vielzahl von Patenten zur Rückgewinnung dieses Wertmetalles, die unter dem Stichwort "Silberrückgewinnung" zu finden sind.

Aber nicht nur die ge- und verbrauchten fotografischen Lösungen sind eine Quelle zur Rückgewinnung von Silber. Wirtschaftlich bedeutsam ist auch das Silber, das im fotografischen Bild dauerhaft verbleibt. Dies gilt insbesondere für die Dokumentation von fotografischen Röntgenaufnahmen im Gesundheitswesen. Dort werden die röntgenografischen Bilder mit ihrem Informationsgehalt für den Mediziner in der Regel für eine Reihe von Jahren aufbewahrt.

Träger für das fotografische Bild ist in der Praxis vielfach eine plane Schicht aus Polyethylenterephthalat (PET). Das PET trägt eine darauf verankerte Gelatineschicht, die bei Schwarz-Weiss-Aufnahmen die Bildinformation in Form von fein verteiltem metallischem Silber enthält.

Nicht mehr genutzter fotografischer Schwarz-Weiss-Altfilm enthält also einmal den Kunststoffträger. Zum anderen enthält er aber auch das in einer Gelatineschicht fein verteilte Silber, beides Stoffe mit wirtschaftlichem Wert.

Will man beide Wertstoffe wieder wirtschaftlich nutzbar machen, so bedarf es eines Verfahrens, das diese Stoffe voneinander trennt.

Es gibt eine Anzahl von Patenten über Verfahren und Apparate zur Rückgewinnung von Silber aus dem nicht mehr genutzten fotografischen Filmmaterial. Dabei werden unterschiedliche Verfahrenswege beschrieben, um das Ziel zu erreichen.

Auf der einen Seite lässt sich die Gelatineschicht durch die Anwendung von Enzymen oder auch durch die Anwendung eines Gemisches von aeroben oder anaeroben Mikroorganismen spalten. Dabei fällt das fein verteilte metallische Silber im Gemisch mit den Spaltprodukten der enzymatischen oder mikrobiellen Altfilmwäsche als Schlamm an. Daraus muss dann in weiteren Verfahrensschritten das metallische Silber abgetrennt und raffiniert werden, bevor es als Wertmetall wieder einer wirtschaftlichen Nutzung zugeführt werden kann.

In der Offenlegungsschrift DE 41 22 729 A1 sowie in der Patentschrift DD 272 531 A1 sind Verfahren zur Anwendung von Enzymen für die Rückgewinnung von Silber aus fotografischem Filmmaterial beschrieben.

Die Europäische Patentschrift 0086841, angemeldet am 20. 8. 12982, nennt Verfahrenswege, in denen die Trennung von Trägermaterial und silberhaltiger Gelatineschicht durch den Einsatz eines Gemisches aerober oder anaerober Mikroorganismen erfolgt.

Auf der anderen Seite kann man das feinverteilte metallische Silber durch chemische Oxidation in Ionenform überführen, und es damit aus der Gelatineschicht herauszulösen. Nach der Altfilmwäsche kann das gelöste Silber zum Beispiel durch Elektrolyse wieder in metallischer Form als Elektrolytsilber zurückgewonnen und wirtschaftlich nutzbar gemacht werden.

In der UK Patent Application GB 2 019 375 A wird das metallische Silber aus der fotografischen Filmschicht zurückgewonnen, indem man eine Reaktion in alkalischer Lösung durchführt, die das Silber durch Oxidation herauslöst und das Trägermaterial von Deckschichten befreit.

Die Lösung enthält sowohl gelöste Cyanid- wie auch Peroxodisulfat-Ionen. Der pH-Wert der Lösung wird durch Zugabe von Alkalihydroxiden auf 12 oder darüber eingestellt.

Die Erfindung bedingt den Einsatz einer Mehrkomponenten-Waschlösung zur Wertstoffgewinnung. Der Einsatz von Cyaniden ebenso wie der bevorzugte Einsatz von Ammoniumperoxodisulfat in stark alkalischer Lösung ist im technischen Maßstab bei strengen Arbeitsschutzbedingungen wirtschaftlich kaum durchführbar.

In dem Britischen Patent 1 087 038 A wird ein Verfahren dargestellt, das zur Rückgewinnung von gebrauchtem Altfilm genutzt werden kann. Die Verwertung findet statt in einem mehrstufigen Verfahren. In einer speziellen mehrstufigen Apparatur werden die fotografischen Deckschichten vom Filmträger einmal mechanisch abgetragen. Zum anderen findet eine fermentative oder oxidative Behandlung mit verschiedenen Oxidantien statt, die in alkalischer Lösung angewendet werden. In dem komplexen Apparat kommen alkalische Lösungen zur Anwendung, die Persulfate, Perchlorate, Chlorate, Chlorite, Hypochlorite Hypobromite, Permanganate, Chromate oder Gemische davon enthalten können. Die Verwendung von Peroxodisulfaten, den Salzen der Peroxodischwefelsäure, in der eingesetzten alkalischen Lösung ist nicht beschrieben,

In der Patentschrift DE 859 992 C wird ein Verfahren zur Entschichtung fotografischer Celluloid- und Sicherheitsfilme beschrieben, bei dem Oxidationsmittel in alkalischer Lösung angewendet werden. Als besonders geeignet werden die Salze der Perschwefelsäure genannt. Die Verwendung von Peroxodisulfaten, den Salzen der Peroxodischwefelsäure, in der eingesetzten alkalischen Lösung ist nicht beschrieben, wohl aber der Einsatz von alkalischen Lösungen die mindestens 2 % aktives Chlor oder aktives Brom enthalten, die man bei 35-60 ° C einwirken lässt.

In der Offenlegungsschrift DE 3219542 A1 wird ein Verfahren zur Ätzung silberhaltigen Filmmaterials beschrieben. Bei diesem Verfahren wird das Herauslösen von Silber aus der Filmschicht durch eine schwefelsaure Cersulfat-Lösung in einem speziellen Apparat beschrieben. Das Verfahren zielt aber nicht auf die wirtschaftliche Verwertung von fotografischem Altfilm, wie sie in dem hier beschriebenen Verfahren durchgeführt wird.

Die Offenlegungsschrift DE 3508504 A1 wie auch die Offenlegungsschrift DE 3908764 A1 beschreiben Methoden zur Reinigung von Kunststoffabfällen und Kunststoffoberflächen, die aber nicht auf die Rückgewinnung von Wertsstoffen aus Altfilmmaterial abzielen. Auch das Britische Patent 1 503 103 beschreibt die Reinigung von geschreddertem Plastikmaterial aus dem Konsumbereich zur Abtrennung von Papier-, Aluminium- und anderen Anhaftungen von der Kunststoffoberfläche.

In dem Britischen Patent 1 432 000 erfolgt eine Auftrennung des Altfilmmaterials in PET-Trägermaterial, haftvermittelnde Schicht, die die Gelatine auf dem Träger fixiert, Gelatine selbst und Silber durch die Anwendung von verschiedenen protischen und aprotischen organischen Lösungsmitteln, die aufeinander folgend unter geeigneten Reaktionsbedingungen angewendet werden.

Das US-Patent 4324705 beschreibt ein Verfahren zur Ablösung der fotografischen Schichten von dem Trägermaterial unter Anwendung von basischen Lösungen in verschiedener Zusammensetzung und Konzentration, um das reine Trägermaterial des fotografischen Filmes zu gewinnen.

In der Europäischen Patentanmeldung EP 0 745 899 A1 und der Offenlegungsschrift DE 44 27 097 A1 steht die Wiederverwendung des Kunststoffes durch ein mehrstufiges Verfahren zur Herstellung von großformatigen, klarsichtigen Planfolien aus verbrauchten (fotografischen) Filmen durch physikalische und chemisch-biologische Oberflächenmodifikationsprozesse im Vordergrund.

Der Einsatz von Peroxodisulfat dient lediglich der Überführung des metallischen Silbers in Silberionen. Die An-, Auf- und Ablösung der fotografischen Deckschichten des Trägermaterials PET durch Ammonium-/ Alkaliperoxodisulfat wird nicht berichtet. Es werden lediglich in einem Verfahrensschritt Sauerstoff, Sauerstoffradikale oder Wasserstoffperoxid eingesetzt.

In dem US Patent Nr. 5,017,455 vom 21. 5. 1991 wird die Rückgewinnung von Trägermaterial aus Altfilm beschrieben, das aus Cellulose-Triacetat besteht. Es wird ein dreistufiges Verfahren beschrieben, bei dem geschredderter Altfilm in der 1. Verfahrensstufe mit einer wässrigen Lösung einer oberflächenaktiven Substanz behandelt wird. In der 2. Stufe wird der geschredderte Film mit einer wässrigen enzymatischen Lösung unter geeigneten Reaktionsbedingungen behandelt. Das zurückgewonnene Trägermaterial wird abschließend in einer Nachbehandlung mit einer wässrigen Lösung von Wasserstoffperoxid gebleicht, um das Basismaterial von Verfärbungen zu befreien. Das Verfahren beschreibt lediglich die Rückgewinnung von fotografischem Trägermaterial auf der Basis von Cellulose-Triacetat. Eine gleichzeitige Rückgewinnung von Silber wird nicht betrachtet.

Das erfindungsgemäße Verfahren unterscheidet sich vom bekannten Stand der Technik dadurch, dass die Altfilmwäsche in einer wässrigen Lösung durchgeführt wird, die nur Ammoniumperoxodisulfat/Alkaliperoxodisulfat enthält. Unerwartet wurde gefunden, dass es möglich ist, ohne weitere Zusatzstoffe und ohne die Einstellung eines definierten pH-Wertes, Silber und Kunststoff-Trägermaterial aus Altfilm zu gewinnen. Die Ausbeute von 98 bis 99,8 Gewichts-% des in der Gelatineschicht enthaltenen Silbers belegt, dass die hier beschriebene Vereinfachung des Verfahrens im Vergleich zum Stand der Technik keine technische Verschlechterung darstellt. Zusatzstoffe wie Alkalihydroxide oder Cyanide damit sind entbehrlich. Das vereinfacht die Prozessführung wesentlich, die in einem Ein-Stufen-Prozess durchgeführt werden kann.

### Aufgabenstellung

Das hier beschriebene, neue Verfahren verbindet die Vorteile beider gängigen Verfahrenswege der Silberrückgewinnung miteinander. Silber wird in wirtschaftlicher Form gewinnbar. Darüber hinaus gewinnt man das Trägermaterial des fotografischen Filmes, ohne störende Restschichten aus der ursprünglichen fotografischen Verwendung als Trägermaterial der Bildinformation.

Das hier beschriebene Verfahren setzt eine chemische Lösung ein, die eine Substanz enthält, die ein höheres elektrochemisches Red-Ox-Potenzial als das Red-Ox-Potenzial von Silber hat.

Die folgende Spannungsreihe wird der Auswahl eines geeigneten Stoffes zur Silberauflösung in der Filmschicht zu Grunde gelegt:

| | |
|---|---|
| Ag⁰ ----- Ag⁺ | E⁰ = + 0,81 V |
| NO₃⁻ ----- NO₂⁻ | E⁰ = + 0,94 V |
| H₂O₂ ----- H₂O + ½ O₂ | E⁰ = + 1,77V |
| S₂O₈²⁻ ---- 2 SO₄²⁻ | E⁰ = + 2,05 V |

Aufgrund ihres Red-Ox-Potenzials sind Salpetersäure oder auch Wasserstoffperoxid gut geeignet. Beide haben ein höheres Normalpotenzial als Silber. Beide Stoffe können daher metallisches Silber auflösen.

Der Einsatz von Wasserstoffperoxid führt nicht zu löslichen Silber-Ionen, sondern vorrangig zu schwerlöslichem Silberoxid. Es muss also eine mehrstufige Raffinationsprozedur zur Gewinnung von Feinsilber nachgeschaltet werden. Bei diesem Verfahrensweg fallen also höhere Kosten an, die ihn weniger wirtschaftlich erscheinen lassen.

Die vorstehend aufgeführte Spannungsreihe mit einer Auswahl an geeigneten Stoffen zur Silberauflösung in der Filmschicht enthält auch das Peroxodisulfat, das von den hier aufgeführten Stoffen mit E⁰ = + 2,05 V das höchste Red-Ox-Potenzial hat. Aus diesem Grunde ist dieser Stoff für den Einsatz in einer Altfilmwäsche mit chemischer Oxidation des feinverteilten metallischen Silbers besonders geeignet.

Das Ammonium-/Alkaliperoxodisulfat ist ein handelsübliches Produkt. In trockener Atmosphäre ist der Stoff stabil. Das farblose Salz ist leicht in Wasser löslich. Die wässrige Lösung reagiert sauer.

Die saure Lösung mit ihrem hohen Oxidationspotenzial löst nicht nur das metallische Silber in Ionenform aus der Gelatineschicht heraus, sondern ist darüber hinaus unter den gewählten Reaktionsbedingungen geeignet, die fotografischen Deckschichten vom Trägermaterial aufzuspalten.

### Beispiel

Für das erfindungsgemäße Verfahren kommt ein Rührreaktor zum Einsatz, der über einen unten liegenden Auslauf verfügt. Dieser Reaktorauslauf befindet sich unter einem Siebboden. Dieser ermöglicht es, nach dem Ende der chemischen Reaktionen, die mit Silber beladene Lösung und das feste PET-Material voneinander zu trennen. In dem Reaktor kann die Lösung wahlweise gekühlt, bei Raumtemperatur oder erwärmt zur Reaktion angewendet werden. Das Altfilm-Material wird manuell, mittels Schneckenförderung oder durch eine Saug-/ Druckförderung in den Reaktor eingetragen.

Vor dem Einbringen in den Reaktor wird das Altfilm-Material unterschiedlicher Größe zerkleinert. Die Partikelgröße des geschredderten Materials wird dem späteren Verwendungszweck des PET-Materiales angepasst. Vorzugsweise wählt man eine Partikel- oder Teilchengröße von 15 x 15 mm.

Zur Herstellung der Reaktionslösung wird Ammonium-/Alkaliperoxodisulfat in geeigneter Konzentration gelöst.

Der Gehalt an Peroxodisulfat liegt im Bereich von 0,1 bis 55 Gewichtsprozent in der Lösung. Vorzugsweise wählt man eine Konzentration 5 Gewichtsprozent in Wasser.

Das Verhältnis zwischen der eingesetzten Gewichtsmenge an zerkleinertem Altfilm-Material und der Gewichtsmenge an Reaktionslösung ist variabel. Vorzugsweise wählt man ein Mengenverhältnis von Altfilm zu Reaktionslösung von 1 zu 2.

Die Reaktionstemperatur wird in dem Reaktor wird zwischen 10 und 70 Grad Celsius variiert.

Die Reaktionszeit wird in Abhängigkeit vom Silbergehalt der Gelatineschicht und der Art der Schicht zur Haftvermittlung von Trägermaterial und Gelatineschicht und der Reaktionstemperatur variiert.

Das gewaschene und wasserfeuchte Kunststoff-Material wird nach der Abtrennung der Reaktionslösung in dem Rührreaktor unter Anlegen von Vakuum bei erhöhter Temperatur oder durch einen erwärmten Luftstrom, der durch den Reaktor geleitet wird, getrocknet. Danach liegt es als Sekundärrohstoff für den Einsatz als Recycling-Kunststoffgranulat vor.

Beispielsweise werden 500 kg zerkleinerten Röntgenfilms in 1000 kg der Reaktionslösung mit 5 Gewichtsprozent an Ammonium-/ Natriumperoxodisulfat bei einer Reaktionstemperatur von 20 Grad Celsius über einen Zeitraum von 5 Stunden miteinander zur Reaktion gebracht.

Im Ergebnis werden 98 bis 99,8 % des in der Gelatineschicht enthaltenen metallischen Silbers herausgelöst. Die Gelatineschicht wird durch die oxidative Behandlung in sedimentierende Bruchstücke gespalten und von der Trägerschicht abgelöst.

Nach dem Ende der Reaktionszeit wird die Reaktionslösung über den unten liegenden Auslauf vom festen PET-Material abgetrennt. Zur Abtrennung der sedimentierten Bruchstücke der Gelatine wird das PET-Material in dem Reaktor mit Wasser gewaschen, bis das Sediment ausgetragen ist

Die Reaktionslösung wird in einem nachfolgenden Verfahrensschritt der elektrolytischen Silberrückgewinnung durch kathodische Reduktion unterworfen. Man gewinnt Elektrolysesilber in hoher Reinheit, das in wirtschaftlicher Weise raffiniert werden kann.

Das Waschwasser wird zur Abtrennung der sedimentierten Gelatinebruchstücke der Filtration und danach zur Vervollständigung der Silberrückgewinnung ebenfalls der Elektrolyse unterworfen. Das auf diese Art gereinigte Wasser wird gesammelt und erneut zur Waschung eingesetzt.

## Patentansprüche

1. Die Erfindung betrifft ein chemisch-technisches Verfahren, mit dessen Hilfe fotografisches Filmmaterial in wieder verwertbare Grundstoffe zerlegt wird, wobei die Reaktionslösung aus einer wässrigen Lösung von Ammonium-/ Alkaliperoxodisulfat mit einem Gehalt an gelöstem Peroxodisulfat in einem Konzentrationsbereich von 0, 1 bis 55 Gewichtsprozent in Wasser besteht.

2. Das Verfahren nach Anspruch 1 **dadurch gekennzeichnet, dass** chemischtechnische Verfahren in einem Rührreaktor durchgeführt wird, der mittels Rührwerk eine intensive Vermischung von festem Altfilmmaterial und Reaktionslösung bewirkt.

3. Das Verfahren nach Anspruch 1 und 2 **dadurch gekennzeichnet, dass** das Altfilmmaterial unterschiedlicher Größe zur Optimierung der Reaktion in dem Reaktor mit Rührwerk vor dem Einbringen zerkleinert wird, damit eine optimale Vermischung im Reaktor erreicht wird.

4. Das Verfahren nach Anspruch 1 bis 3 **dadurch gekennzeichnet, dass** das Verhältnis zwischen der eingesetzten Menge an zerkleinertem Altfilmmaterial und der Menge an Reaktionslösung variiert wird, um einen optimalen Wirkungsgrad zur Rückgewinnung der Wertstoffe zu erreichen.

5. Das Verfahren nach Anspruch 1 bis 4 **dadurch gekennzeichnet, dass** die Reaktionstemperatur zwischen 10 und 70 Grad Celsius variiert wird, um einen optimalen Wirkungsgrad zur Rückgewinnung der Wertstoffe zu erreichen.

6. Das Verfahren nach Anspruch 1 bis 5 **dadurch gekennzeichnet, dass** das feste Kunststoffmaterial nach der Behandlung mit der Reaktionslösung mit einem wässrigen Lösungsmittel gewaschen wird, um Anteile der durch die Anwendung der Reaktionslösung veränderten organischen Deckschichten abzuwaschen.

7. Das Verfahren nach Anspruch 1 bis 6 **dadurch gekennzeichnet, dass** das gewaschene und wasserfeuchte Kunststoffmaterial in dem Rührreaktor unter Anlegen von Vakuum bei erhöhter Temperatur oder durch einen erwärmten Luftstrom, der durch den Reaktor geleitet wird, getrocknet wird.

8. Das Verfahren nach Anspruch 1 bis 6 **dadurch gekennzeichnet, dass** das in der Reaktionslösung wie in der Waschlösung enthaltene gelöste Silber in einem nachfolgenden Verfahrensschritt der elektrolytischen Silberrückgewinnung durch kathodische Reduktion unterworfen wird.

## Claims

1. A method for separating waste photographic material into reusable base materials, in which the reaction solution is consisting of an aqueous solution of ammonia-/alkaline- peroxodisulfate in the range of concentration between 0,1 to 55 weight percentage.

2. A method according to Claim 1 wherein the method is carried out in a stirring reactor by using a stirrer for an intensive mixture of the solid waste photographic material and the reaction solution.

3. A method according to Claim 1 and 2 **characterized by** using waste photographic material, which is shredded before filled into the reactor, thus optimizing the mixture in the reactor.

4. A method according to Claim 1 to 3 **characterized by** the variation of the added quantity of the shredded waste photographic material and the quantity of the reaction solution, thus reaching an optimal efficiency for the recovery of the basic materials.

5. A method according to Claim 1 to 4 **characterized by** the variation of the reaction temperature between 10 and 70 degrees centigrade, thus reaching an optimal efficiency of the basic materials.

6. A method according to Claim 1 to 5 **characterized by** the fact, that the plastic material is rinsed with an aqueous solution after treatment with the reaction solution in order to wash off the organic cover layers modified by using the reaction solution.

7. A method according to Claim 1 to 6 **characterized by** the fact, that the washed and moisture plastic material is dried within the stirring reactor either using vacuum at a higher temperature or using a warmed up air stream.

8. A method according to Claim 1 to 6 **characterized by** the fact, that the silver, dissolved in the reaction solution as well as dissolved in the rinsing solution, is treated by electrolytic silver recovery in a separated process, thus carrying out a cathodic reduction of the silver.

## Revendications

1. Méthode pour la séparation des matérieaux photographiques dans des matérieaux de base pour réutilisation, dans laquelle la solution de réaction se compose d'un mélange des peroxodisulfates d'ammonium ou d'alkaline avec un percentage massique entre 0,1 jusqu'à 55 % des peroxodisulfates.

2. Méthode selon no. 1 characterisée d'une manière que le processus est effectué dans un réacteur dans lequel les matérieaux sont vivement agités.

3. Méthode selon no. 1 et 2 charakterisée d'une manière que les matérieaux photographiques sont concassés avant être ajoutés au réacteur pour optimiser la réaction.

4. Méthode selon de no. 1 à 3 charakterisée d'une manière que la relation entre les masses des matériaus photographiques et la solution de réaction est variée pour optimiser le rendement de la récuperation des matérieaux de base.

5. Méthode selon de no. 1 à 4 charakterisée d'une manière que la température de la reaction est variée entre 10 jusqu'à 70 centigrade pour optimiser le rendement de la récuperation des matérieaux de base.

6. Méthode selon de no. 1 à 5 charakterisée d'une manière que la matière plastique est lavée, après le traitement avec la solution de réaction, par une solution de lavage aqueuse pour décoller les résidus de la couverture modifiée par la réaction.

7. Méthode selon de no. 1 à 6 charakterisée d'une manière que la matière plastique qui est lavée et mouilleuse, est sechée dans le réacteur par une évaporation sous vide et température elevée, ou par un écoulement d'air chaud.

8. Méthode selon de no. 1 à 4 charakterisée d'une manière que l'argent qui est dissolu dans la solution de réaction et dans la solution de lavage est traité par une réduction cathodique pour la récuperation de l'argent.
